# FASCICULE DE BREVET EUROPEEN

(11) **EP 4 096 949 B1**
(45) Date de publication et mention de la délivrance du brevet: **15.05.2024**
(21) Numéro de dépôt: 20841986.1
(22) Date de dépôt: 07.12.2020
(51) Int. Cl.: B60K 6/48, B60K 6/52, B60W 10/02, B60W 10/06, B60W 10/08, B60W 10/26, B60W 20/14, B60W 30/18, F16D 48/06

(54) **PROCEDE DE GESTION D'UNE PHASE DE DECELERATION D'UN VEHICULE AUTOMOBILE DE TYPE HYBRIDE**
VERFAHREN ZUM VERWALTEN EINER VERZÖGERUNGSPHASE EINES HYBRID-KRAFTFAHRZEUGS
METHOD FOR MANAGING A DECELERATION PHASE OF A HYBRID-TYPE MOTOR VEHICLE

(30) Priorité: 28.01.2020 FR 2000798
(43) Date de publication de la demande: 07.12.2022
(73) Titulaire: Stellantis Auto SAS, 78300 Poissy (FR)
(72) Inventeur: SCHAEFFER, Eric, 75013 Paris (FR); HABBANI, Ridouane, 92600 Asnieres sur Seine (FR); MILHAU, Yohan, 78630 Orgeval (FR); MICHAUT, Simon, 95870 Bezons (FR)
(86) Numéro de dépôt international: PCT/FR2020/052297
(87) Numéro de publication internationale: WO 2021/152225

(56) Documents cités:
- EP-A1- 3 090 910
- FR-A1- 2 842 145
- FR-A1- 3 032 166

## Description

La présente invention porte sur un procédé de gestion d'une phase de décélération d'un véhicule automobile de type hybride. Par véhicule automobile de type "hybride", on entend un véhicule automobile ayant une source de puissance thermique et une source de puissance électrique pour assurer sa traction.

On connaît des chaînes de traction de véhicule automobile comportant un moteur thermique et un moteur électrique de traction montés sur un train de roues du véhicule automobile.

Le moteur électrique de traction est connecté à un arbre d'entrée d'une boîte de vitesses. Un arbre de sortie de la boîte de vitesses est connecté aux roues par l'intermédiaire d'un différentiel. La boîte de vitesses est par exemple une boîte de vitesses automatique, notamment une boîte de vitesses à trains épicycloïdaux.

Un embrayage, dit embrayage d'interconnexion moteur, est interposé entre le moteur thermique et le moteur électrique de traction. A l'état ouvert, l'embrayage d'interconnexion moteur permet d'isoler le moteur électrique de traction par rapport au moteur thermique lorsque le moteur électrique assure une traction du véhicule dans un mode de roulage électrique. L'embrayage d'interconnexion moteur est fermé dans un mode de roulage thermique.

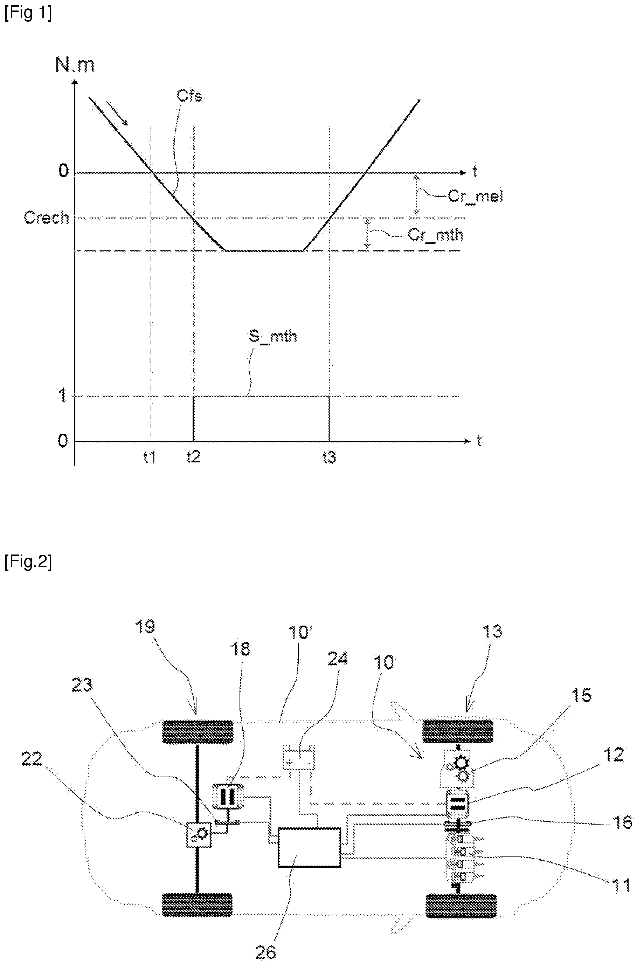

Comme cela est illustré par la figure 1, lors d'une phase de décélération intervenant notamment lors d'un relâchement d'une pédale d'accélérateur, un calculateur du véhicule commande, à partir de l'instant t1, l'application d'un couple résistant Cr_mel correspondant à un couple négatif du moteur électrique qui fonctionne alors en mode générateur pour recharger la batterie. Le couple de freinage respectant le couple de freinage souhaité correspond alors au couple résistant Cr_mel.

A l'instant t2, lorsqu'une capacité de recharge maximale de la batterie a été atteinte, le calculateur pilote le démarrage du moteur thermique ainsi que son couplage à la boîte de vitesses par une fermeture au moins partielle de l'embrayage d'interconnexion moteur (le signal S_mth relatif à la commande du moteur thermique passe à 1). Le calculateur pilote l'embrayage d'interconnexion moteur de façon que le moteur thermique fournisse un couple négatif permettant d'obtenir le couple de freinage souhaité.

Ainsi, entre les instants t2 et t3, le moteur électrique ne participe plus au freinage du véhicule automobile et le calculateur commande l'application d'un couple résistant par le moteur thermique Cr_mth pour respecter le couple de freinage souhaité Cfs.

A l'instant t3, le moteur thermique est désaccouplé de la boîte de vitesses puis arrêté (le signal S_mth repasse à 0), de sorte que le véhicule peut repasser dans un mode de fonctionnement électrique.

L'inconvénient de ce procédé est que le moteur thermique est sollicité de façon précoce, ce qui entraîne une surconsommation de carburant ainsi que des émissions de particules polluantes.

On connait encore le document FR2842145A1 correspondant au préambule de la revendication 1.

L'invention vise à remédier efficacement à cet inconvénient en proposant un procédé de gestion d'une phase de décélération d'un véhicule automobile comportant une chaîne de traction comprenant:
- un moteur électrique relié mécaniquement à un arbre d'entrée d'une boîte de vitesses,
- une batterie reliée électriquement au moteur électrique,
- un moteur thermique, et
- un embrayage d'interconnexion moteur interposé entre le moteur thermique et le moteur électrique,
- ledit procédé comportant, lors d'une phase de décélération dans laquelle le moteur thermique est à l'arrêt et l'embrayage d'interconnexion moteur ouvert :
- une étape d'application d'un premier couple résistant correspondant à un couple négatif du moteur électrique fonctionnant en mode générateur pour recharger la batterie, puis
- une étape d'application d'un deuxième couple résistant correspondant à un couple négatif du moteur thermique par un démarrage et un couplage du moteur thermique à la boîte de vitesses par une fermeture au moins partielle de l'embrayage d'interconnexion moteur,
- le deuxième couple résistant étant appliqué dès qu'est atteint un couple de freinage souhaité égal à une somme d'un couple précédemment appliqué par le moteur électrique lorsqu'une capacité de recharge maximale de la batterie a été atteinte et d'un couple de pertes mécaniques du moteur thermique.

L'invention permet ainsi, en tenant compte des pertes mécaniques du moteur thermique, de retarder l'application du deuxième couple résistant par le moteur thermique. En temporisant l'application du couple négatif par le moteur thermique, l'invention limite donc la consommation en carburant du véhicule ainsi que les émissions de dioxyde de carbone.

Selon une mise en oeuvre de l'invention, le procédé comporte une étape de pilotage de l'embrayage d'interconnexion moteur de sorte que le moteur thermique fournisse un couple négatif permettant d'obtenir le couple de freinage souhaité.

Selon une mise en oeuvre de l'invention, le couple de pertes mécaniques du moteur thermique tient compte de pertes mécaniques par frottement, de pertes mécaniques par pompage, et de pertes mécaniques liées à un entraînement d'organes auxiliaires, tels qu'un climatiseur ou un alternateur.

Selon une mise en oeuvre de l'invention, le couple de pertes mécaniques du moteur thermique dépend d'un régime cible du moteur thermique.

Selon une mise en oeuvre de l'invention, le couple de pertes mécaniques est déterminé à l'aide d'une cartographie recevant en entrée un régime cible du moteur thermique et fournissant en sortie le couple de pertes mécaniques associé.

Selon une mise en oeuvre de l'invention, la phase de décélération est mise en oeuvre lors d'un relâchement d'une pédale d'accélérateur.

L'invention a également pour objet un calculateur comportant une mémoire stockant des instructions logicielles pour la mise en oeuvre du procédé de gestion d'une phase de décélération d'un véhicule automobile tel que précédemment défini.

L'invention concerne en outre un véhicule automobile comportant un calculateur tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1, déjà décrite, est une représentation graphique de l'évolution en fonction du temps d'un couple de freinage d'un véhicule automobile et d'une phase de démarrage et de couplage à une boîte de vitesses d'un moteur thermique appliquant un couple résistant lors d'une mise en oeuvre d'un procédé connu de gestion d'une phase de décélération d'un véhicule automobile;
[Fig. 2] La figure 2 est une représentation schématique d'une chaîne de traction pour véhicule automobile mettant en oeuvre un procédé selon l'invention de gestion d'une phase de décélération d'un véhicule automobile;

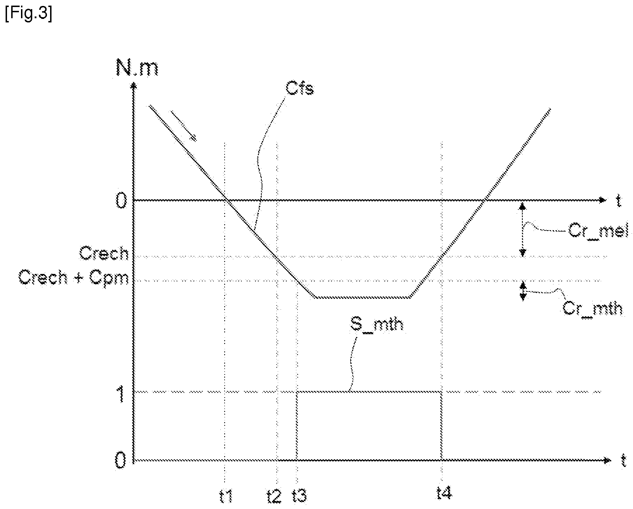

[Fig. 3] La figure 3 est une représentation graphique de l'évolution en fonction du temps d'un couple de freinage d'un véhicule automobile et d'une phase de démarrage et de couplage à une boîte de vitesses d'un moteur thermique appliquant un couple résistant lors d'une mise en oeuvre d'un procédé selon l'invention de gestion d'une phase de décélération d'un véhicule automobile.

La figure 2 montre une chaîne de traction 10 pour un véhicule automobile 10' comportant un moteur thermique 11 et un moteur électrique de traction 12 montés sur un train de roues 13 du véhicule automobile 10', notamment un train de roues avant. Le moteur thermique 11 est par exemple un moteur thermique à quatre cylindres. En variante, le moteur thermique 11 pourra bien entendu comporter un nombre différent de cylindres, notamment trois cylindres ou plus de quatre cylindres.

Le moteur électrique de traction 12 est connecté à un arbre d'entrée de la boîte de vitesses 15. Un arbre de sortie de la boîte de vitesses 15 est connecté aux roues par l'intermédiaire d'un différentiel (non représenté). La boîte de vitesses 15 est par exemple une boîte de vitesses automatique, notamment une boîte de vitesses à trains épicycloïdaux.

Un embrayage 16, dit embrayage d'interconnexion moteur, est interposé entre le moteur thermique 11 et le moteur électrique de traction 12. L'embrayage d'interconnexion moteur 16 est un embrayage piloté, c'est-à-dire que la fermeture et l'ouverture, ainsi que des positions intermédiaires de mise en glissement peuvent être commandées de façon automatique par un calculateur 26 sans action particulière de la part du conducteur. Le calculateur 26 est décrit plus en détails ci-après.

A l'état ouvert, l'embrayage d'interconnexion moteur 16 permet d'isoler le moteur électrique de traction 12 par rapport au moteur thermique 11 lorsque le moteur électrique 12 assure une traction du véhicule dans un mode de roulage électrique. L'embrayage d'interconnexion moteur 16 est fermé dans un mode de roulage thermique.

Un deuxième moteur électrique de traction 18 est monté sur le train de roues arrière 19 du véhicule automobile 10' par l'intermédiaire d'un réducteur 22 et d'un dispositif de couplage et de découplage 23 du moteur électrique de traction 18 avec le train arrière 19.

Le réducteur 22 permet de rendre compatible la vitesse de rotation très élevée du moteur électrique de traction 12 avec celle des roues du véhicule qui est moins élevée.

Le dispositif de couplage et de découplage 23 pourra prendre un état ouvert dans lequel le moteur électrique de traction 18 est désaccouplé par rapport au train de roues arrière 19 et un état fermé dans lequel le moteur électrique de traction 18 est accouplé avec le train de roues arrière 19. Le dispositif de couplage et de découplage 23 est de préférence un dispositif à crabot. En variante, le dispositif de couplage et de découplage 23 prend la forme d'un embrayage.

Une batterie 24 est reliée électriquement au moteur électrique de traction 12 et au moteur électrique de traction 18. La batterie 24 est ici commune aux deux moteurs électriques de traction 12, 18. En variante, on utilise une batterie 24 associée à chaque moteur électrique de traction 12, 18.

Le premier moteur électrique de traction 12 et le deuxième moteur électrique de traction 18 pourront présenter une haute tension de fonctionnement, notamment une tension supérieure à 48 Volts.

Un moteur électrique de traction 12, 18 est apte à transformer une énergie électrique issue de la batterie 24 en une énergie mécanique pour assurer une traction du véhicule. Un moteur électrique de traction 12, 18 est également apte à fonctionner dans un mode générateur dans lequel au moins un moteur électrique 12, 18 transforme une énergie mécanique en une énergie électrique permettant de recharger la batterie 24, notamment lors d'une phase de freinage récupératif. Le moteur électrique de traction 12, 18 applique alors un couple négatif aux roues du véhicule.

Une telle architecture permet au véhicule de fonctionner dans un mode thermique pur, un mode de propulsion hybride, un mode de propulsion électrique pur, un mode 4x4 hybride, et un mode 4x4 électrique.

Le calculateur 26 assure le pilotage des différents composants de la chaîne de traction 10. Ce calculateur 26 comporte une mémoire stockant des instructions logicielles pour la mise en oeuvre du procédé selon l'invention de gestion d'une phase de décélération du véhicule automobile 10'. La phase de décélération est avantageusement mise en oeuvre lors d'un relâchement d'une pédale d'accélérateur.

Comme cela est illustré par la figure 3, lors de la phase de décélération, le calculateur 26 commande, à partir de l'instant t1, l'application d'un premier couple résistant Cr_mel correspondant à un couple négatif du moteur électrique de traction 12 qui fonctionne alors en mode générateur pour recharger la batterie 24. Le couple de freinage respectant le couple de freinage souhaité Cfs correspond alors au couple résistant Cr_mel. Le véhicule automobile fonctionne alors dans une phase de freinage récupératif.

A l'instant t2, la capacité de recharge maximale de la batterie 24 est atteinte. Contrairement au procédé selon l'état de la technique, le couple résistant Cr_mth n'est pas appliqué dès cet instant mais de façon différée à l'instant t3.

Plus précisément, le couple résistant du moteur thermique Cr_mth est appliqué à l'instant t3 dès qu'est atteint un couple de freinage égal à la somme d'un couple Crech précédemment appliqué par le moteur électrique 12 lorsqu'une capacité de recharge maximale de la batterie 24 a été atteinte et d'un couple de pertes mécaniques Cpm du moteur thermique 11.

Le couple de pertes mécaniques Cpm tient compte de pertes mécaniques par frottement, de pertes mécaniques par pompage, et de pertes mécaniques liées à un entraînement d'organes auxiliaires, tels qu'un climatiseur ou un alternateur, ou autre.

Le couple de pertes mécaniques Cpm dépend d'un régime cible du moteur thermique. Avantageusement, le couple de pertes mécaniques Cpm est déterminé à l'aide d'une cartographie recevant en entrée un régime cible du moteur thermique 11 et fournissant en sortie le couple de pertes mécaniques Cpm associé.

A l'instant t3, le calculateur 26 pilote alors le démarrage du moteur thermique 11 ainsi que son couplage à la boîte de vitesses 15 par une fermeture au moins partielle de l'embrayage d'interconnexion moteur 16 (le signal S_mth relatif à la commande du moteur thermique 11 passe à 1). Le calculateur 26 pilote l'embrayage d'interconnexion moteur 16 de sorte que le moteur thermique 11 fournisse un couple négatif permettant d'obtenir le couple de freinage Cfs souhaité.

Ainsi, entre les instants t3 et t4, le moteur électrique 12 ne participe plus au freinage du véhicule automobile (le coupe résistant Cr_mel n'est plus appliqué) et le calculateur 26 commande l'application d'un couple résistant Cr_mth par le moteur thermique 11 à partir du moment où a été atteint le couple de freinage Crech majoré du couple de pertes mécaniques Cpm du moteur thermique 11.

A l'instant t4, le moteur thermique 11 est désaccouplé de la boîte de vitesses 15 par le pilotage d'une ouverture de l'embrayage 16 puis est arrêté (le signal S_mth repasse à 0). Le véhicule automobile 10' repasse alors dans un mode de fonctionnement électrique.

En variante, le moteur électrique 18 pourra également participer à la mise en oeuvre du procédé selon l'invention de gestion d'une phase de décélération du véhicule automobile 10'.

En variante, l'architecture de la chaîne de traction 10 pourra être inversée, c'est-à-dire que le moteur électrique de traction 12 et le moteur thermique 11 pourront être montés sur le train de roues arrière 19 du véhicule automobile 10', tandis que le moteur électrique de traction 18 ainsi que le réducteur 22 et le dispositif de couplage et de découplage 23 pourront être montés sur le train de roues avant 13 du véhicule automobile 10'.

## Revendications

1. Procédé de gestion d'une phase de décélération d'un véhicule automobile (10') comportant une chaîne de traction (10) comprenant:
- un moteur électrique (12) relié mécaniquement à un arbre d'entrée d'une boîte de vitesses (15),
- une batterie (24) reliée électriquement au moteur électrique (12),
- un moteur thermique (11), et
- un embrayage d'interconnexion moteur (16) interposé entre le moteur thermique (11) et le moteur électrique (12),
- ledit procédé comportant, lors d'une phase de décélération dans laquelle le moteur thermique (11) est à l'arrêt et l'embrayage d'interconnexion moteur (16) ouvert :
- une étape d'application d'un premier couple résistant (Cr_mel) correspondant à un couple négatif du moteur électrique (12) fonctionnant en mode générateur pour recharger la batterie (24), puis
- une étape d'application d'un deuxième couple résistant (Cr_mth) correspondant à un couple négatif du moteur thermique (11) par un démarrage et un couplage du moteur thermique (11) à la boîte de vitesses (15) par une fermeture au moins partielle de l'embrayage d'interconnexion moteur (16),
**caractérisé en ce que** le deuxième couple résistant (Cr_mth) est appliqué dès qu'est atteint un couple de freinage souhaité (Cfs) égal à une somme d'un couple (Crech) précédemment appliqué par le moteur électrique (12) lorsqu'une capacité de recharge maximale de la batterie (24) a été atteinte et d'un couple de pertes mécaniques (Cpm) du moteur thermique (11).

2. Procédé selon la revendication 1, **caractérisé en ce qu'**il comporte une étape de pilotage de l'embrayage d'interconnexion moteur (16) de sorte que le moteur thermique (11) fournisse un couple négatif permettant d'obtenir le couple de freinage souhaité (Cfs).

3. Procédé selon la revendication 2 ou la revendication 3, **caractérisé en ce que** le couple de pertes mécaniques (Cpm) du moteur thermique (11) tient compte de pertes mécaniques par frottement, de pertes mécaniques par pompage, et de pertes mécaniques liées à un entraînement d'organes auxiliaires, tels qu'un climatiseur ou un alternateur.

4. Procédé selon l'une quelconque des revendications 1 à 3, **caractérisé en ce que** le couple de pertes mécaniques (Cpm) du moteur thermique (11) dépend d'un régime cible du moteur thermique.

5. Procédé selon l'une quelconque des revendications 1 à 4, **caractérisé en ce que** le couple de pertes mécaniques (Cpm) est déterminé à l'aide d'une cartographie recevant en entrée un régime cible du moteur thermique et fournissant en sortie le couple de pertes mécaniques (Cpm) associé.

6. Procédé selon l'une quelconque des revendications 1 à 5, **caractérisé en ce que** la phase de décélération est mise en oeuvre lors d'un relâchement d'une pédale d'accélérateur.

7. Calculateur (26) comportant une mémoire stockant des instructions logicielles pour la mise en oeuvre du procédé de gestion d'une phase de décélération d'un véhicule automobile (10') tel que défini selon l'une quelconque des revendications précédentes.

8. Véhicule automobile comportant un calculateur (26) tel que défini selon la revendication 8.

## Patentansprüche

1. Verfahren zur Bewältigung einer Verzögerungsphase eines Kraftfahrzeugs (10'), das eine Traktionskette (10) umfasst, umfassend:
- einen Elektromotor (12), der mechanisch mit einer Eingangswelle eines Getriebes (15) verbunden ist,
- eine mit dem Elektromotor (12) elektrisch verbundene Batterie (24),
- eine Wärmekraftmaschine (11) und
- eine Motorverbindungskupplung (16), die zwischen dem Wärmemotor (11) und dem Elektromotor (12) angeordnet ist,
- wobei das Verfahren während einer Verzögerungsphase, in der die Wärmekraftmaschine (11) gestoppt und die Motorverbindungskupplung (16) geöffnet ist, Folgendes umfasst:
- einen Schritt des Aufbringens eines ersten Widerstandsdrehmoments ( Cr_mel ), das einem negativen Drehmoment des im Generatormodus arbeitenden Elektromotors (12) entspricht, um dann die Batterie (24) wieder aufzuladen
- einen Schritt des Aufbringens eines zweiten Widerstandsdrehmoments ( Cr_mth ), das einem negativen Drehmoment des Wärmemotors (11) entspricht, durch Starten und Koppeln des Wärmemotors (11) mit dem Getriebe (15) durch Schließen der Motorverbindungskupplung zu einem geringeren Teil (16),
gekennzeichnet , dass das zweite Widerstandsdrehmoment ( Cr_mth ) aufgebracht wird, sobald ein Bremsdrehmoment souhaité (Cfs)gleich einer Summe eines zuvor vom Elektromotor (12) aufgebrachten Drehmoments ( Crech ) erreicht wird, wenn eine maximale Wiederaufladekapazität der Batterie (24) erreicht ist. erreicht wurde und einige mechanische Verluste ( Cpm ) der Wärmekraftmaschine (11).

2. Verfahren nach Anspruch 1, **dadurch gekennzeichnet, dass** es einen Schritt zum Steuern der Motorverbindungskupplung (16) umfasst, so dass der Wärmemotor (11) ein negatives Drehmoment liefert, das es ermöglicht, ein gewünschtes Bremsmoment zu erhalten (Cfs).

3. Verfahren nach Anspruch 2 oder Anspruch 3, **dadurch gekennzeichnet, dass** das Paar mechanischer Verluste ( Cpm ) der Wärmekraftmaschine (11) mechanische Verluste durch Reibung, mechanische Verluste durch Pumpen und mechanische Verluste im Zusammenhang mit Antriebshilfskomponenten berücksichtigt, wie eine Klimaanlage oder eine Lichtmaschine.

4. Verfahren nach einem der Ansprüche 1 bis 3, **dadurch gekennzeichnet, dass** das Drehmoment mechanischer Verluste ( Cpm ) der Wärmekraftmaschine (11) von einer Zieldrehzahl der Wärmekraftmaschine abhängt.

5. Verfahren nach einem der Ansprüche 1 bis 4, **dadurch gekennzeichnet, dass** das Drehmoment der mechanischen Verluste (Cpm ) unter Verwendung eines Kennfelds bestimmt wird, das als Eingabe eine Zieldrehzahl der Wärmekraftmaschine empfängt und als Ausgabe das Drehmoment der zugehörigen mechanischen Verluste ( Cpm ) bereitstellt..

6. Verfahren nach einem der Ansprüche 1 bis 5, **dadurch gekennzeichnet, dass** die Verzögerungsphase beim Loslassen eines Gaspedals durchgeführt wird.

7. Computer (26), der einen Speicher umfasst, der Softwareanweisungen zum Implementieren des Verfahrens zum Verwalten einer Verzögerungsphase eines Kraftfahrzeugs (10') gemäß einem der vorhergehenden Ansprüche speichert.

8. Kraftfahrzeug mit einem Computer (26) nach Anspruch 8.

## Claims

1. Method for managing a deceleration phase of a motor vehicle (10') comprising a traction chain (10) comprising:
- an electric motor (12) mechanically connected to an input shaft of a gearbox (15),
- a battery (24) electrically connected to the electric motor (12),
- a heat engine (11), and
- a motor interconnection clutch (16) interposed between the thermal engine (11) and the electric motor (12),
- said method comprising, during a deceleration phase in which the heat engine (11) is stopped and the engine interconnection clutch (16) open:
- a step of applying a first resistant torque ( Cr_mel ) corresponding to a negative torque of the electric motor (12) operating in generator mode to recharge the battery (24), then
- a step of applying a second resistant torque ( Cr_mth ) corresponding to a negative torque of the heat engine (11) by starting and coupling the heat engine (11) to the gearbox (15) by closing at less partial of the engine interconnection clutch (16),
**characterized in that** the second resistant torque ( Cr_mth ) is applied as soon as a braking torque souhaité (Cfs)equal to a sum of a torque ( Crech ) previously applied by the electric motor (12) is reached when a maximum recharge capacity of the battery (24) has been reached and a couple of mechanical losses ( Cpm ) of the heat engine (11).

2. Method according to claim 1, **characterized in that** it comprises a step of controlling the motor interconnection clutch (16) so that the heat engine (11) provides a negative torque making it possible to obtain a desired braking torque (Cfs).

3. Method according to claim 2 or claim 3, **characterized in that** the pair of mechanical losses ( Cpm ) of the heat engine (11) takes into account mechanical losses by friction, mechanical losses by pumping, and mechanical losses linked to a drive auxiliary components, such as an air conditioner or an alternator.

4. Method according to any one of claims 1 to 3, **characterized in that** the torque of mechanical losses ( Cpm ) of the heat engine (11) depends on a target speed of the heat engine.

5. Method according to any one of claims 1 to 4, **characterized in that** the torque of mechanical losses ( Cpm ) is determined using a map receiving as input a target speed of the heat engine and providing as output the torque of associated mechanical losses ( Cpm ).

6. Method according to any one of claims 1 to 5, **characterized in that** the deceleration phase is implemented when an accelerator pedal is released.

7. Computer (26) comprising a memory storing software instructions for implementing the method for managing a deceleration phase of a motor vehicle (10') as defined according to any one of the preceding claims.

8. Motor vehicle comprising a computer (26) as defined according to claim 8.
